# EUROPEAN PATENT APPLICATION

(11) **EP 1 207 483 A2**
(43) Date of publication of application: **22.05.2002**
(21) Application number: 01308000.7
(22) Date of filing: 19.09.2001
(51) Int. Cl.: G06F 17/60

(54) **System and process to electronically categorize and access resource information**

(30) Priority: 21.09.2000 US 666983
(71) Applicant: GENERAL ELECTRIC COMPANY, Schenectady, NY 12345 (US)
(72) Inventor: Acampa, Brian John, Saugus, Massachusetts 01906 (US); Brakeley, Elizabeth Myers, North Andover, Massachusetts 01845 (US); Christopherson, Charles Kammer, Andover, Massachusetts 01810 (US); Geiger, James Webster, Cambridge, Massachusetts 02139 (US); Weider, Lee Ayers, Groveland, Massachusetts 01834 (US); Perkins, Robert Paul, Wakefield, Massachusetts 01880 (US); Yanosik, Edward Michael, Cincinnati, Ohio 45233 (US); Gauden, William Hartland, Cincinnati, Ohio 45241 (US)
(74) Representative: Goode, Ian Roy

(57) **Abstract**

A computer system for engineers to locate and obtain reference information associated with an engineering task to be accomplished by the engineers has a server computer and several client computers connected together over an Intranet or Extranet. The server computer has a database stored on it that includes engineering tasks, items of engineering reference information associated with the engineering tasks and information regarding the storage locations of the engineering reference information. The engineer, from a client computer, accesses a web page on the Intranet or Extranet and progresses through a hierarchy of engineering task categories to identify the particular engineering task (102) to be accomplished by the engineer and the associated item of reference information (104) of interest to the engineer. The engineer can then activate a hyperlink from a web page and then be connected to an electronic document or web page (106) on another computer that includes the reference information of interest to the engineer. After the engineer has reviewed the information, the engineer can apply the reviewed information to accomplishing his engineering task (108).

## Description

The present invention relates generally to a system for making resource information available to users. More specifically, the present invention is related to a system that relates particular tasks to categorized resource information useful for accomplishing the particular task.

Engineers and workers, in many fields, routinely refer to reference or resource information in order to accomplish specific engineering tasks and produce consistent high quality products and services that meet industry, government and company standards. However, an engineer can experience some difficulty in identifying the appropriate reference information for his particular engineering task. Another difficulty for the engineer is in trying to determine if some item of identified reference information is actually the most valid and up-to-date version of the reference information. In addition, if an engineer identifies the appropriate reference information there is often no effective way for the engineer to notify other engineers of the discovery or availability of the appropriate reference information. Without an effective cataloging system, identification of applicable and current reference information can many times be a redundant and inconsistent process. Furthermore, once the applicable reference information is identified, the engineer may have difficulty in obtaining access to the reference information because the engineer is not directed to the appropriate repositories storing the reference information.

U.S. Patent No. 5,890,149, the '149 patent, describes a system for sales and marketing employees to access High Impact Knowledge about the organization's products and services, competitor's products and services and customer needs. The High Impact Knowledge is organized into a series of objects each having a concise and ideal response or Best Answer to a particular aspect of High Impact Knowledge. There are several different techniques for a user to access the knowledge objects. The user can select a particular subject and then be presented with a series of topic attributes. A selection of a topic attribute for the subject displays several corresponding Best Answers and the selection of a Best Answer displays additional information for the user. However, the '149 patent does not describe a system for accumulating and updating technical information and requirements, cross-referencing this information to government regulations, industry standards and company standards while providing engineers with access to this resource information to perform their specific engineering tasks.

Therefore, what is needed in the art is a system and procedure for an engineer to quickly identify and obtain the appropriate engineering reference information including technical information, company and industry standards and government regulations to be used in accomplishing an engineering task.

One embodiment of the present invention is related to a method of accomplishing an engineering task using applicable engineering reference information by first identifying a particular engineering task to be accomplished by progressing through a hierarchy of engineering task categories on a web page. Next, engineering reference information is identified that can be of assistance in accomplishing the identified engineering task. A storage location of the identified engineering reference information is then obtained. The identified engineering reference information is then accessed using the obtained storage location. Finally, the engineering task is accomplished using the accessed engineering reference information.

Another embodiment of the present invention is related to a system for locating and obtaining reference information associated with an engineering task. The system includes a server computer and at least one client computer networked with the server computer. An engineering database is stored on the server computer. The engineering database includes a plurality of engineering tasks, a plurality of reference information items and a plurality of reference information location items. The system also includes means for searching the engineering database from a client computer to identify a particular engineering task of the plurality of engineering tasks. A means for identifying from the client computer at least one reference information item of the plurality of reference information items associated with the particular engineering task is used. Finally, the system includes means for obtaining reference information corresponding to the at least one reference information item associated with the particular engineering task to assist an engineer in accomplishing the particular engineering task.

One advantage of the present invention is that it provides a mechanism that permits users to quickly identify various types of available reference information, such as company and industry standards, building codes and technical publications that can be applied to particular work tasks. Another advantage of the present invention is that it can assist in identifying the locations of the reference information to facilitate the quick access of the reference information by the users and thereby assure that the reference information is actually used. Yet another advantage of the present invention is that it permits the reference information to be continuously updated, thereby ensuring that the reference information that is accessed is the most current, valid and up-to-date information available.

Still another advantage of the present invention is that it allows an engineer to draw on the experiences of other engineers, giving the engineer access to the same tools previous engineers used in performing the same engineering tasks.

Other features and advantages of the present invention will be apparent from the following more detailed description of the preferred embodiment, taken in conjunction with the accompanying drawings which illustrate, by way of example, the principles of the invention, and in which:

Figure 1 is a flowchart illustrating a process for using the system of the present invention.

Figure 2 shows a home page used with the system of the present invention.

Figure 3 shows a web page with tasks and reference information.

Figure 4 shows a web page to submit feedback about the system.

Figure 5 shows a web page to add new reference information to the system.

Whenever possible, the same reference numbers will be used throughout the figures to refer to the same elements.

The present invention is directed to a computer system having a central database with information that associates work tasks, problems, deliverables, requirements, etc. with appropriate reference information and directs users to the corresponding area where the reference information is located. Before the system of the present invention can be used, the central database must be populated or customized with information to reflect the specific tasks, problems or deliverables, reference information and storage locations of the reference information that may be required by the target users of the system. The information in the central database is preferably stored in a plurality of records, wherein each record includes a work task, problem or deliverable, one or more associated items of reference information and the locations or addresses of the associated items of reference information. In other words, each record in the database is for a particular task and includes all reference information and location information associated with that task. The system also has several feedback and submission mechanisms that permit the users of the system to the keep the reference information in the central database current and accurate.

The tasks stored in the central database are preferably organized into several hierarchical categories or tiers. The tasks in the central database are first organized or categorized into a top-level or first-tier of categories that broadly categorize the tasks that are stored in the central database. Next, each of the first-tier categories is further classified and defined to have a lower level or second-tier of categories that further organizes or categorizes the tasks of the first-tier category. Additional tiers and levels can be used to further organize or categorize the tasks in the second-tier categories until a desired specificity of categorization is reached for the tasks. The tasks stored in the central database can be organized or categorized into any number of tiers or levels. The number of tiers or levels used to categorize tasks in the central database is based on a variety of different factors, such as the number of tasks stored in the central database, the total scope of subject matter covered by the tasks and the ease with which users can use and understand the categorization of the central database. All of the tasks stored in the central database are categorized into one or more categories. Each task categorized into a lower tier category is also categorized into all the corresponding higher tier categories related to that particular lower tier category. In addition, certain tasks may be classified into different and unrelated categories depending on the categorization scheme used in the central database. Further, a task may be categorized into only a higher tier category even though there are lower tier categories available.

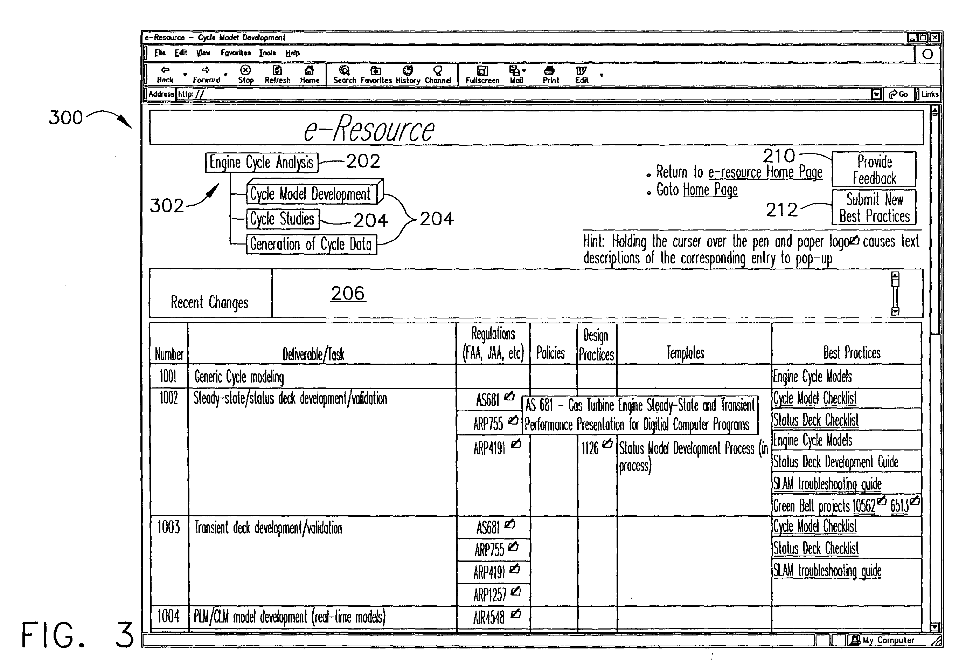

In a preferred embodiment of the present invention, all the records in the central database pertain to tasks and reference information used or encountered by engineers designing products and services to company, industry and government standards. In other words, in the preferred embodiment, the records in the central database pertain to engineering tasks and engineering reference information. Specifically, the engineering tasks and engineering reference information in the central database pertain to engineering tasks and engineering reference information related to aircraft engine development. For example, the engineering tasks related to aircraft engine development included in the central database can be directed to engine cycle analysis, control systems analysis and production and field support. Some specific engineering tasks related to aircraft engine development that can be included in the central database are shown in Figure 3. However, the records in the central database can pertain to other types of tasks and reference information. For example, the records in the central database can pertain to tasks and reference information regarding current medical practices for use by medical professionals, to tasks and reference information regarding building codes for use by construction personnel or for any other types of tasks that require the use of reference information.

The system of the present invention preferably has a central or server computer that is used to store the central database of information with work tasks, resource information and storage locations. The system of the present invention also preferably has one or more remote or client computers that can access the central database stored on the server computer. The client computers and server computer can be any type of general purpose computer having memory devices (e.g. RAM, ROM, hard disk, CD-ROM, etc.), processing units (e.g. CPU, ALU, etc.) and input/output devices (e.g. monitor, keyboard, mouse, printer, etc.). The server computer and the client computers are preferably connected or linked together through an Intranet or Extranet. However, the server computer and the client computers can be connected or linked together by any type of network such as a local area network (LAN), wide area network (WAN) or even the Internet. In an another embodiment of the present invention, each of the client or remote computers are again linked together through an Intranet or Extranet, however instead of accessing the central database on the server computer, the client computers have loaded into their memory a complete copy of the central database or a portion of the central database that is relevant to the performance of specific types of tasks.

In another embodiment of the present invention, a complete copy of the central database or a portion of the central database that is relevant to the performance of specific types of tasks can be loaded onto a computer readable medium such as a CD-ROM or DVD-ROM. In addition, the corresponding reference information for the tasks stored in the central database may also be stored on the computer readable medium. A user can then search and access, from the computer readable medium, the task information in the central database and either obtain the corresponding reference information directly from the computer readable medium or obtain the reference information as described below using hyperlinks and the Intranet or Extranet.

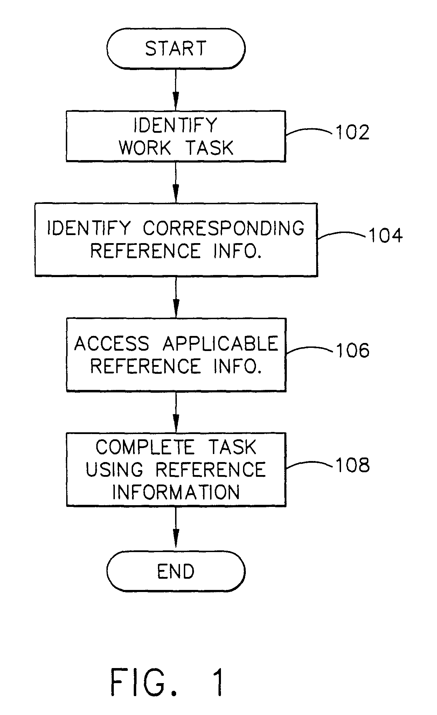

A user of the system of the present invention will preferably follow the process illustrated in Figure 1 to obtain reference information for a particular task. In step 102, the user will progress through the categories of the central database to identify the particular task or tasks the user is attempting to accomplish. Next, in step 104, the user identifies the corresponding reference information in the central database that is associated to the particular task of the user. The user then accesses or obtains the applicable reference information in step 106. Finally, in step 108, the user completes the task using the reference information the user accessed or obtained in step 106. If the user has additional tasks to complete or accomplish, the user can repeat the process starting at step 102 as many times as necessary to accomplish all the tasks.

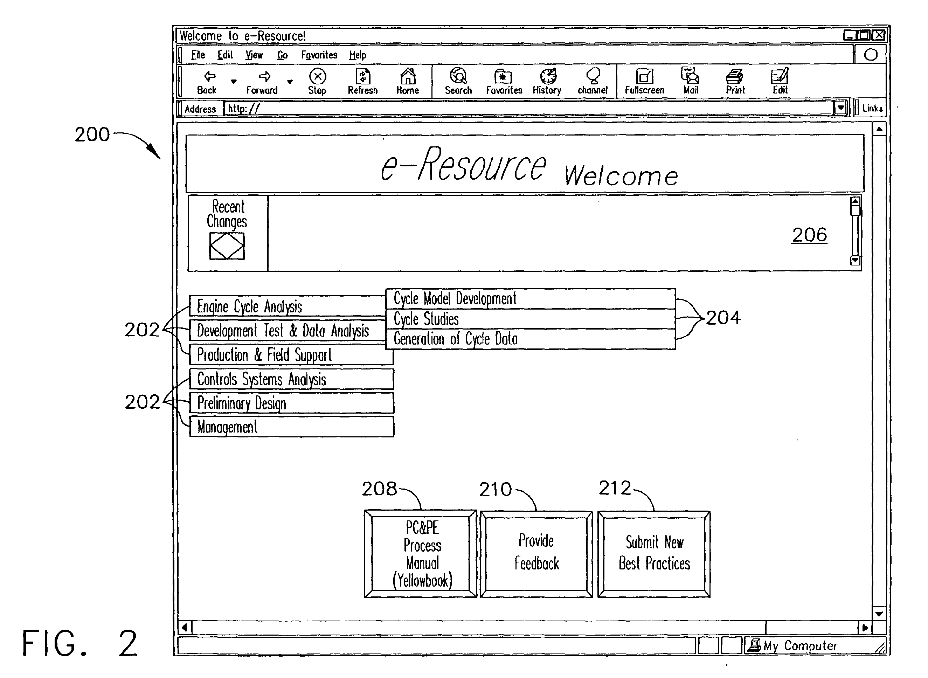

To begin the process shown in Figure 1, a user of the system will access a home page or starting screen that is associated with the information in the central database. The home page will frequently have the first level or tier of categories of tasks displayed for user selection, in addition to other types of information. In another embodiment, however, the first level or tier of categories of tasks can be displayed on another page that is linked to the home page. The home page is preferably stored or located on the server computer for the most efficient association with the information in the central database but can be located or stored on any computer on the Intranet or Extranet. Figure 2 shows a home page 200 that can be used in a preferred embodiment of the present invention. The home page 200 shown in Figure 2 is preferably implemented in HTML and Java applets or any other similar types of browser compatible software. By implementing the home page 200 in HTML and Java, any client computer with a web browser can access the homepage 200 regardless of the operating system (MacOS, Windows, Unix, etc.) being executed by the client computer.

On home page 200, the user is presented with a list of first-tier categories 202 that correspond to the first-tier of categories for tasks in the central database. As discussed above, the first-tier categories are generally very broad in scope and represent a broad characterization of the tasks. In a preferred embodiment, a user can choose from six first-tier categories 202 that relate to different types of engineering tasks on home page 200. However, there can be additional or fewer first-tier categories depending of the categorization of tasks in the central database. Once the user has selected the first-tier category 202 that is most related to his particular task, the user will then be presented with several second-tier categories 204 that further categorize or organize the tasks in the first-tier category. In a preferred embodiment, the first first-tier category 202 has three second-tier categories 204 associated with it that further classify and define the engineering tasks in the first first-tier category 202.

As shown in Figure 2, the second-tier categories 204 are preferably displayed in a pop-up text box or menu that associates the second-tier categories 204 with the first-tier category 202. The pop-up text box can be displayed by activating a button that corresponds to the appropriate first-tier category. Alternatively, the pop-up box can be displayed by simply placing the mouse over the button that corresponds to the appropriate first-tier category (a rollover technique). In another embodiment, the selection of a button that corresponds to a first-tier category 202 can result in a new web page or screen being displayed on the client computer that only has the second-tier categories. Furthermore, additional tiers of categories can be presented to the user in pop-up text boxes or on additional pages or screens as necessary to correspond with the categorization of tasks in the central database.

In addition, on home page 200 there is an information field 206 to provide information about recent changes to the system or the central database or any other type of related information. Also, there are buttons 208-212 that provide other options to the user. Button 208 provides a user with access to a manual that includes detailed information on the sequence of the engineering tasks used throughout the engineering process. The manual can include some of the tasks that are included in the central database, but does not include any of the reference information associated with those tasks. Button 210 permits a user to provide feedback about the user's opinion of the system and process for obtaining reference information. Finally, button 212 permits the user to submit his/her own best practices to be included in the central database of the system. The options provided to the user by buttons 210 and 212 are described in greater detail below.

In the preferred embodiment of the present invention, once the user has selected the lowest-tier category available, the tasks and associated reference information in the lowest-tier category are displayed for the user. In another embodiment of the present invention, the user will be able to display the tasks and associated reference information for any tiered category desired by the user. The user will be able to display the tasks and associated reference information for several lower-tiered categories by selecting a higher-tiered category that includes all the lower-tiered categories.

Referring back to Figure 2, once the user has selected a second-tier category 204, the user is linked or connected to a page or screen 300 shown in Figure 3 that displays the tasks and associated reference information categorized in the second-tier category selected by the user. On the task display page 300, all the engineering tasks that have been categorized into both the first-tier and second-tier categories selected by the user are displayed to the user. In a preferred embodiment of the present invention, the engineering tasks and the associated reference information are displayed in a spreadsheet format. However, any type of similar display format can be used so long as a user can identify the particular reference information associated with a task.

In a preferred embodiment of the present invention, the information displayed to the user in the spreadsheet format is taken directly from the central database. This arrangement permits the task display page 300 to display the most current information in the central database and stay consistent with the central database as information in the central database is changed and updated. The categories and subcategories of tasks that are displayed to the user can also be taken directly from the central database, however, they are typically just included in the page or screen programming because they will not change as often as the information in the central database. In another embodiment, the information displayed on the task display page 300 can be programmed into the task display page 300 and then updated as new information is received.

When using the spreadsheet format of the preferred embodiment to display information, a column can preferably be used to designate each type of reference information that is associated with a particular task. As discussed above, the reference information displayed in each column is preferably taken directly from the central database and preferably includes only a description or title of the reference information. In a preferred embodiment of the present invention, reference information such as pertinent government regulations (e.g. FAA regulations, JAA regulations, etc.) that are applicable, company policies, design practices or templates that are applicable and other background information, best practices or other types of pertinent information, can be associated with a particular task. Company policies and design practices that are applicable include information about company standards and minimum requirements that need to be complied with in accomplishing the task. Templates that are applicable include information about a sequence of sub-tasks or sub-steps that can be used in accomplishing the task. Best practices and other pertinent information can include information on checklists to be followed in accomplishing the tasks, quality control procedures or projects related to the tasks, troubleshooting and development guides related to the tasks, industry standards or guidelines related to the tasks and technical manuals. In other words, reference information can include information about internal requirements of the company, external requirements outside of the company, customer requirements and industry requirements in order to assist a user in performing or accomplishing the particular task. In other embodiments of the present invention, additional or fewer types of reference information can be displayed with each task. To provide the user with a more detailed and extensive description of some of the reference information, a pop-up text box can be associated with the particular item of reference information. This is particularly beneficial when there is more reference information than could be provided within reasonable cell dimensions.

Once the user has located the task and decided on the associated reference information the user is interested in, the user will then have to access or obtain the information in order to be able to apply it to his particular task. Recall from above that the central database stores the location of the reference information associated with a task. This location information is then used to assist the user in finding his selected reference information and preferably includes a web address or URL. In a preferred embodiment of the present invention, the listing of the description or title of the reference information is displayed to the user in the form of a hyperlink connecting to the web address or URL included in the storage location information. Preferably, the reference information will be in an electronic document or web page that is stored on the Intranet or Extranet at the web address included in the storage location information. When the user activates the hyperlink for an item of reference information that is in an electronic document or web page, the user is automatically linked through the Intranet, Extranet or internal network to the web address of the electronic document or web page stored on a corresponding computer on the network. A copy of the electronic document or web page is then displayed by launching, as required, any necessary related software applications such as word processors, spreadsheets, etc. In addition to the display of a copy of the electronic document or web page, the address on the Intranet or Extranet of the electronic document or web page will also be displayed or made available to the user. The user will be able to save the Intranet or Extranet address for the electronic document for a quick retrieval of the reference information by the user at a later time. In another embodiment, the user can be hyperlinked to electronic documents or web pages including reference information that are stored on the Internet. The hyperlinking to electronic documents can occur provided that the documents are stored on an adequately accessible computer server (internal network or Internet), appropriate security procedures are followed, no copyright violations exist, etc. In the situation where the reference information is not in the form of an electronic document, the user can be hyperlinked to a web page or screen or to a separate document that gives the physical location (e.g. building, library, office etc.) of the hardcopy of the reference information. In another embodiment, the physical location of the reference information can be displayed through the use of pop-up text boxes or similar arrangements. If the user is interested in several items of associated reference information the user may have to return to the task display page 300 to access additional hyperlinks to other items of reference information.

In one embodiment of the present invention, before a user can access the system on the Intranet or Extranet, the user may be asked to provide a login identification and password or be subjected to a similar type of security measure. The login identification or other security measure can be used to control the access to certain items of resource information by certain users. Limitations on access to certain pieces or items of reference information may be necessary if some of the reference information is of a classified, confidential or proprietary nature and is not to be accessible to certain users who lack the proper authorization to view the information. Additionally, security measures, e.g. passwords, may also be implemented before a user can access an item of reference information from one of the other computers on the Intranet or Extranet.

On the task display page 300, the user is also provided with an outline or map 302 illustrating the particular path the user followed to obtain the task display page 300. The outline 302 includes the first-tier category 202 selected and the second-tier category 204 selected. In an embodiment of the present invention, the user will be able to use the outline 302 to return to a particular category or retrace his steps through the different tiers by selecting the button that corresponds to a particular tiered category.

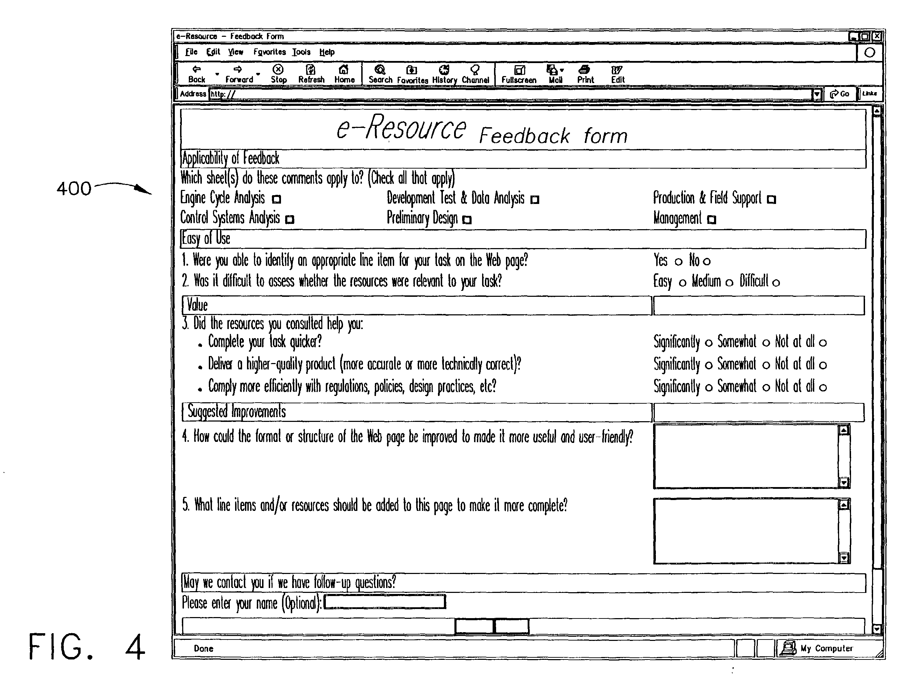

The user will also be able to provide feedback regarding the system and the information in the central database by selecting the "provide feedback" button 210 on either the task display page 300, the home page 200 or any other displayed page that has the "provide feedback" button 210. The "provide feedback" button 210 can provide a local process custodian of the system and central database with feedback regarding the usefulness of the system and provide the users with a means of suggesting modifications to the system and process. Once the "provide feedback" button 210 has been selected, the user is connected or linked to the provide feedback page or screen 400 illustrated in Figure 4. On the provide feedback page 400, the user is provided with a series of questions that permit the user to give his opinion about the system and the information in the central database. Some types of questions that a user can be asked include questions directed to the ease of use of the system and information, questions directed to the value of the information to the user and questions directed to how the system and the information in the central database can be improved. However, other similar types of questions can also be asked of the user.

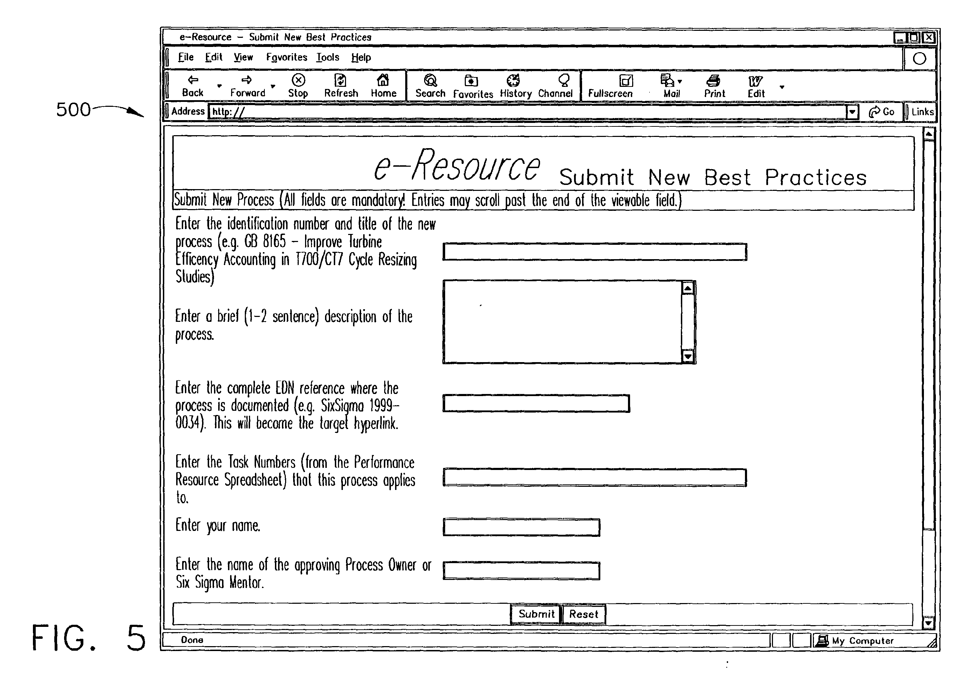

Additionally, the user will also be able to suggest new or additional tasks and resource or reference information that should be included in the system and the central database by selecting the "submit best practices" button 212 on either the task display page 300, the home page 200 or any other displayed page that has the "submit best practices" button 212. The "submit best practices" button 212 permits a user to inform the local process custodian of the system and central database of new or revised tasks or reference information that needs to be populated or included into the system and central database. Once the "submit best practices" button 212 has been selected, the user is connected or linked to the submit best practices page or screen 500 illustrated in Figure 5. On the submit best practices page 500, the user is provided with a series of questions that permit the user to enter information about particular tasks or resource information that should be included in the system and the central database. Some types of questions that a user can be asked include questions directed to the task relating to that the reference information and questions directed to where the reference information is located. Many of the types of questions asked of the user are related to the schema and categorization of the information in the central database.

Once the user has finished supplying the information requested on the submit best practices page 500, the information supplied by the user is then reviewed by a reviewing body such as an authorized person or group to determine if the information is accurate and appropriate for inclusion in the central database. If the information is accurate and appropriate, the information, i.e. the task and/or resource information, is added to the central database. This process permits the information in the central database to remain current and accurate because the users of the information in the central database can make contributions regarding the reference information and tasks included in the central database.

In a preferred embodiment of the present invention, the information the user submits from the submit best practices page 500 is stored in a suggestion database. The suggestion database permits the monitoring of all the suggested new tasks and reference information that are submitted by users of the system. The information is entered into the suggestion database manually from the submissions received from the users. However, an automated system could be used to enter the submitted information into the suggestion database. The information in the suggestion database is reviewed as described above for inclusion in the central database. The suggestion database permit tracking of the number of times an item of reference information is suggested for inclusion in the central database and the number of time a particular person has made suggestions.

In another embodiment of the present invention, instead of using web pages to display tasks and reference information, any application that supports the use of hyperlinks such as spreadsheets and word processing tables, can be used to display tasks and reference information. The spreadsheet or word processing table can be used to display a list of tasks and the associated resource information for the tasks included in the central database. The user would then select an item of reference information from the spreadsheet or word processing table and be hyperlinked to the reference information as described above.

In still another embodiment of the present invention, reference information hyperlinks can be integrated into other applications to make reference information available for use with the application. For example, a wizard or word processing template that is used for the preparation of a document or deliverable associated with a particular task may include a field or fields that require entry of specific information. The reference information hyperlinks can be integrated into or included with the wizard or word processing template to permit the user to access an electronic document that can provide the specific information for the field. To illustrate, a user may need to enter an applicable government regulation or industry standard into a field in a word processing template, the user would select an associated reference information hyperlink for an electronic document that includes the related industry standards and then enter the appropriate or required information from the electronic document into the field in the word processing template.

## Claims

1. A method of accomplishing an engineering task using applicable engineering reference information, the method comprising the steps of:
identifying a particular engineering task (102) to be accomplished by progressing through a hierarchy of engineering task categories;
identifying at least one item of engineering reference information (104) to assist a user in accomplishing the identified engineering task;
obtaining a storage location of the at least one item of engineering reference information;
accessing the at least one item of engineering reference information (106) by using the obtained storage location; and
accomplishing the particular engineering task by using the accessed at least one item of engineering reference information (108).

2. The method of claim 1 further comprising the steps of:
storing information regarding the storage location of the at least one item of engineering reference information in a database, wherein the information regarding the storage location of the at least one item of engineering reference information includes an address;
displaying the at least one item of engineering reference information as a hyperlink connected to the address included with the information regarding the storage location of the at least one item of engineering reference information;
selecting the hyperlink for the at least one item of engineering reference information; and
hyperlinking to the address included with the information regarding the storage location of the at least one item of engineering reference information.

3. The method of claim 2 wherein the step of hyperlinking to the address includes hyperlinking to a web page including the storage location of the at least one item of engineering reference information.

4. The method of claim 1 further comprising the steps of:
storing the particular engineering task and information regarding the at least one item of engineering reference information in a database on a server computer;
accessing the server computer from a client computer to identify the particular engineering task (102) and to identify the at least one item of engineering reference information (104);
storing an electronic document including the at least one item of engineering reference information on a remote computer connected to both the server computer and the client computer, wherein the electronic document has a corresponding web address that is stored in the database; and
hyperlinking from the client computer to the electronic document on the remote computer using the web address stored in the database.

5. The method of claim 1 further comprising the steps of:
displaying a plurality of first-tier engineering task categories (202);
selecting one first-tier engineering task category of the plurality of first-tier engineering task categories (202) associated with the particular engineering task;
displaying a plurality of second-tier engineering task categories (204) in response to the selected first-tier engineering task category;
selecting one second-tier engineering task category of the plurality of second-tier engineering task categories (204) associated with the particular engineering task; and
displaying at least one engineering task categorized into the selected second-tier engineering task category and information regarding a plurality of items of engineering reference information associated with the at least one engineering task categorized into the selected second-tier engineering task category.

6. The method of claim 1 further comprising the steps of:
storing engineering tasks, information regarding items of engineering reference information and storage locations of the items of engineering reference information in a database;
submitting additional engineering tasks, additional items of engineering reference information and storage locations of the additional items of engineering reference information to a reviewing body;
selecting, by the reviewing body, the additional engineering tasks, additional items of engineering reference information and storage locations of the additional items of engineering reference information to be included in the database; and
including the selected additional engineering tasks, additional items of engineering reference information and storage locations of the additional items of engineering reference information in the database.

7. The method of claim 1 wherein the at least one item of engineering reference information includes at least one of engineering technical manuals, government regulations, industry engineering standards and company policies and design practices.
